Europäisches Patentamt

European Patent Office

Office européen des brevets

(11) Publication number: **0 181 147**
**B1**

# EUROPEAN PATENT SPECIFICATION

(45) Date of publication of patent specification: **13.09.89**

(51) Int. Cl.⁴: **G 01 G 3/14, G 01 G 21/24**

(21) Application number: **85307853.3**

(22) Date of filing: **30.10.85**

(54) Weighing apparatus.

(30) Priority: **08.11.84 GB 8428274**

(43) Date of publication of application:
**14.05.86 Bulletin 86/20**

(45) Publication of the grant of the patent:
**13.09.89 Bulletin 89/37**

(84) Designated Contracting States:
**AT BE CH DE FR GB IT LI LU NL SE**

(56) References cited:
**EP-A-0 093 221**
**GB-A-1 139 010**
**GB-A-2 104 670**

(73) Proprietor: **DOBSON PARK INDUSTRIES PLC
Dobson Park House Colwick Industrial Estate
Nottingham NG1 2BX (GB)**

(72) Inventor: **Ford, Derek William
21 Ennerdale Road
Sherwood Nottingham NG5 3GP (GB)**

(74) Representative: **Neill, Alastair William et al
Appleyard Lees & Co. 15 Clare Road
Halifax West Yorkshire HX1 2HY (GB)**

## Description

The invention relates to weighing apparatus and particlarly to weighing apparatus incorporating electrical load cells.

When utilising weighing apparatus incorporating load cells, it is desirable to transmit the load to be measured to such a cell in a linear direction such that the line of action is substantially constant and along a fixed path. Preferably the load should be applied to a single cell. Ideally, the load should be measured by a single load cell positioned directly on a vertical line passing through the centre of gravity of the load placed on the weighing platform or weigh pan. When weighing a granular load however, feed and discharge means will normally be positioned on this vertical line and so location of a load cell on the vertical line is not possible.

Even when load cells can be placed directly below or above a weighing platform or weigh pan, other supports or steadying means are frequently necessary, particularly with high speed weighing. When a load is displaced to apply load to the load cell, the supports or steadying means accept some load and this may affect the reading or measurement of the load.

If a plurality of load cells is used, such that the load is carried directly or indirectly by two or three load cells acting in unison, problems arise from the need to calibate and match the load cells to provide accurate measuring.

It is known to use load cells with a system of beams but pivot friction and the paths travelling by the pivots make it difficult to provide accurate weighing. Load cells incorporated in cantilever beams have also been used, usually in pairs, but such load cells are expensive and the cost may be prohibitive on certain types of appartus. Furthermore, other supports or steadying means may still be necessary.

Load cells are extremely accurate in the measurement of tensile or compressive forces but in many cases do not lend themselves for use in hostile environments such as, for example, the weighing of granular loads such as fertilizers, where ingress of material to the load cell can cause rapid deterioration and failure of the cell and its electrical connections. Consequently known load cells for this type of weighing application have been protected by encasement in resin or rubber compounds, or by metallic covers, but his tends to affect the temperature or resistance properties of the cells and is generally unacceptable where very accurate weighing is required.

GB—A—1 139 010 discloses an early form of automatic batch weigher having a load sensor, utilising coupling means in the form of two resilient strips. Such strips are not rigid in the longitudinal direction and they do not provide any steadying effect in their longitudinal direction. If therefore a batch weigher of the kind described in GB—A—1 139 010 were used for modern high speed weighing, additional anti-sway links or tension wires would be required to steady the load.

The invention seeks to provide weighing apparatus incorporating a load sensing device which does not require steadying means such as anti-sway links or tension wires which are normally required to steady the load, particularly on high speed automatic weighing apparatus.

Accordingly the invention provides weighing apparatus comprising: a fixed member; a load supporting member; coupling means coupling the load supporting member to the fixed member, the coupling means comprising a pair of parallel, spaced apart, elongate flexure means each of which is capable of flexing to permit the load supporting member to move in a first direction past the fixed member but is rigid in the longitudinal direction thus steadying the load supporting member and preventing movement of the load supporting member towards the fixed member in the direction of the longitudinal axis of the flexure means, one end of each flexure means being rigidly connected to the fixed member, the other end of each flexure means being rigidly connected to the load supporting member, and each flexure means having, adjacent each end, a portion of reduced thickness to define accurately a flexure point: a first projection rigid with the fixed member and extending toward the load supporting member; a second projection rigid with the load supporting member and extending towards the fixed member; and a load sensing device, the load sensing device being connected between a point on the first projection and a point on the second projection, which points move towards and away from one another along a linear path as the load supporting member moves to and fro past the fixed member, the load sensing device extending along the linear path so that when load is applied to the load supporting member, the load sensing device is subjected to a substantially pure tensile or compressive load; the fixed member, the load supporting member, and the flexure members forming a parallelogram.

By ensuring that the flexure means steadies the load supporting member, additional steadying means may be eliminated.

The load supporting member may be positioned to one side of the fixed member, thus making the apparatus very suitable of use in weighing granular loads, where feed and discharge means may be positioned respectively above and below the load supporting member.

Positioning the load supporting member to one side also makes it possible to isolate and protect the load sensing device from the material being weighed thus preventing contamination from adversely affecting the load sensing device.

Preferably a single load sensing device, for example a single load cell, is used. This allows better access to the load supporting member. It also avoids the need to calibrate and match a plurality of cells and a single cell has a greater working range than a plurality of cells.

If, for example, two cells are used, they only carry half the load, and have a correspondingly reduced working range.

Arranging for the load sensing device to be loaded purely in tension or purely in compression makes it possible to avoid the use of a complex and costly shear beam type load cell. It also means that the weighing measurements are unaffected by the fact that the load may be offset to one side of the load sensing device.

By way of example, specific embodiments of the invention will now be described, with reference to the accompanying drawings, in which:—

Figure 1 is a side view of an embodiment of weighing apparatus according to the invention, with the weighing pan omitted;

Figure 2 is an end view of the apparatus shown in Figure 1;

Figure 3 is a view similar to Figure 1 but showing the weigh pan in position;

Figure 4 is a diagrammatic side view of an embodiment of a batch weighing apparatus according to the invention;

Figure 5 is a diagrammatic side view of an embodment of continuous weighing apparatus according to the invention;

Figure 6 is a side view of an embodiment of check weighing apparatus according to the invention; and

Figure 7 is a side view of an embodiment of belt weighing apparatus according to the invention.

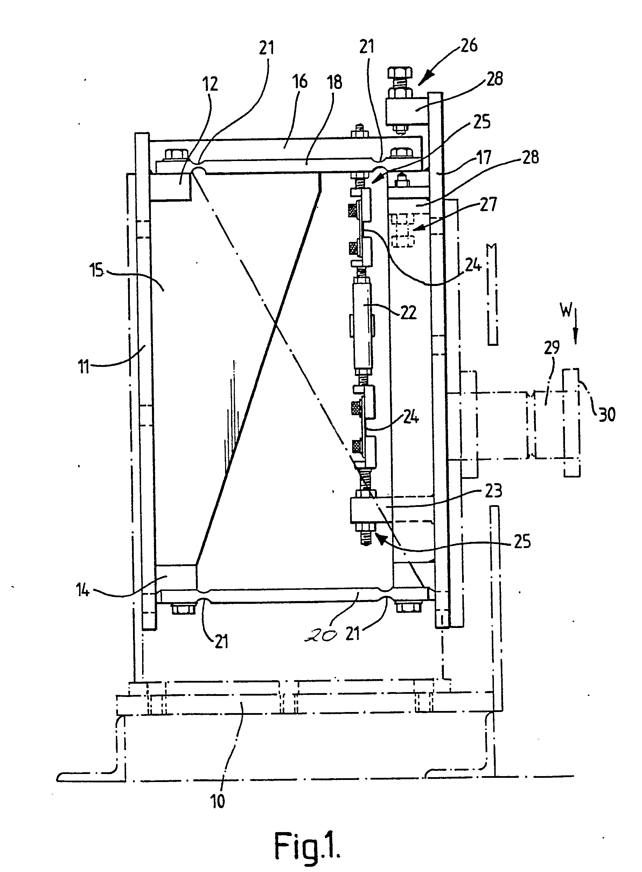

Referring firstly to Figures 1 to 3, the weighing apparatus has a rigid support frame mounted on a chassis 10. The support frame comprises a first vertical plate 11 from which project two spaced apart upper lugs 12, 13 and one central lower lug 14. A central triangular web 15 supports a horizontally extending arm 16.

A second movable vertical plate 17 is connected to the plate 11 by three flexure arms 18, 19 and 20. These arms extend respectively from the lugs 12, 13 and 14 to similar lugs on the plate 17. Each flexure arm has portions 21 of reduced thickness enabling the arms to flex adjacent to the plates 11 and 17, the remainder of the length of the arms remaining rigid.

Thus the plates and the flexure arms form a parallelogram type construction, guiding the plate 17 for vertical movement parallel to the plate 11 with a minimum of friction and wear.

A load cell 22 is connected between the rigid arm 16 and a lug 23 on the plate 17. The load cell 22 is connected by means of upper and lower flexure tapes 24 and each tape is connected to the arm 16 or lug 23 by a threaded rod and nut arrangement 25 which enables the position and/ or pretension of the load cell 22 to be finely adjusted.

It will thus be seen that downward movement of the plate 17 applies a substantially purely tensile load to the load cell 2.

The degree of vertically movement of the plate 17 is limited by upper and lower adjusting screws 26, 27, fitted into further lugs 28 on the plate 17.

The downward movement of the plate 17 is limited by engagement of the screw 26 with the upper surface of the arm 16 and the vertical movement of the plate 17 upwardly is limited by engagement of the screw 27 with the underside of the arm 16.

Projecting horizonitally from the plate 17, away from the load cell 22, in the manner of a cantilever, is a spigot 29 bearing a restangular flange 30.

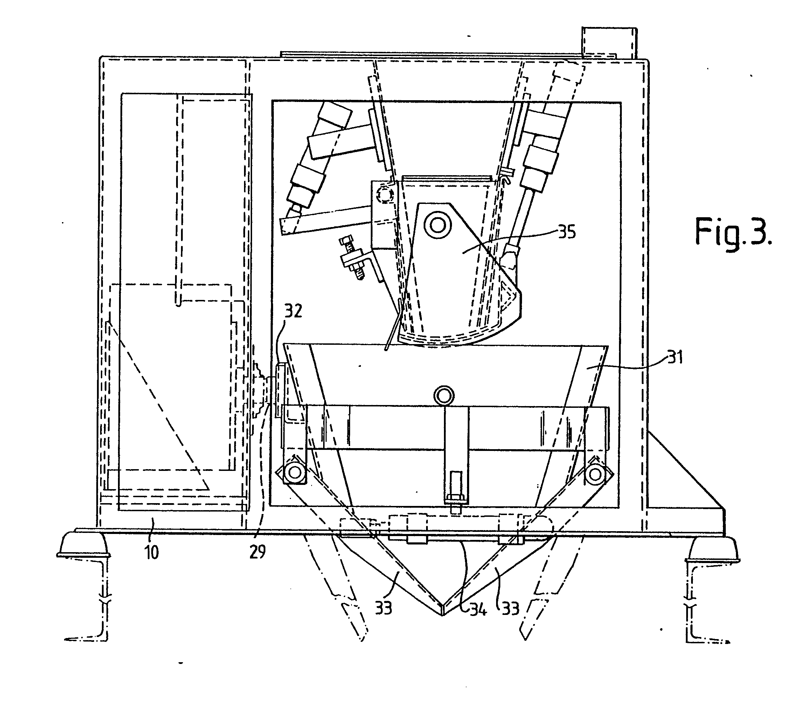

Figure 3 illustrates the weighing apparatus utilised for automatic weighing. A weigh pan 31 is releasably connected to the spigot 29 by means of a claw 32 which engages over the flange 30 thus transmitting all the load of the weigh pan 31 and any material therein to the plate 17. When it is desired to remove the weigh pan 31 it can by uncoupled by lifting it vertically off the flange 30.

The weigh pan 31 is in the form of a hopper having a pair of lower doors 33 which can be opened by extending a ram 34 and can be closed again by retracting the ram.

Above the hopper 31 is a filling and metering device 35 which is described in more detail in our EP—A2—181738.

In use the device 35 is used to fill the hopper 31 and when the weighing apparatus indicates that the hopper 31 is received a predetermined desired quantity of particulate material the metering device 35 is closed to prevent the supply of further material and the doors 33 are opened to release the measured quantity of material. The cycle is then repeated and the weighing may take place very rapidly.

When carrying out automatic weighing in this way, particularly when it is carried out rapidly, there is a tendency for the hopper 31 to be shaken sideways movement can adversely affect measurements of conventional weighing apparatus. For this reason it is customary to attach steadying links to the hopper 31. In the present case, the side attachment of the plate 17 to the hopper itself provides a degree of steadying movement in the horizontal direction.

The construction of the weighing apparatus as shown in Figure 3 is analagous to a person holding a saucepan wherein the pan is the hopper 31, and the handle of the saucepan is equivalent to the spigot 29, and the person's wrist supporting and sensing the load is equivalent to the load cell 22.

In operation the load to be weighed, W (see Figure 1) is applied via the spigot 29 to the plate 17. The plate 17 thus moves under the influence of the load W, travelling parallel to the plate 11 under the control of the flexure arms 18, 19 and 20. Thus the lugs 23 of the plate 17 drops with respect to the arm 16, inducing a tensile load in the load cell 22. The electrical signal from the load cell may be transmited to either a digital or analogue readout device or alternatively may be used for control purposes, for example to control the discharge of material into the hopper.

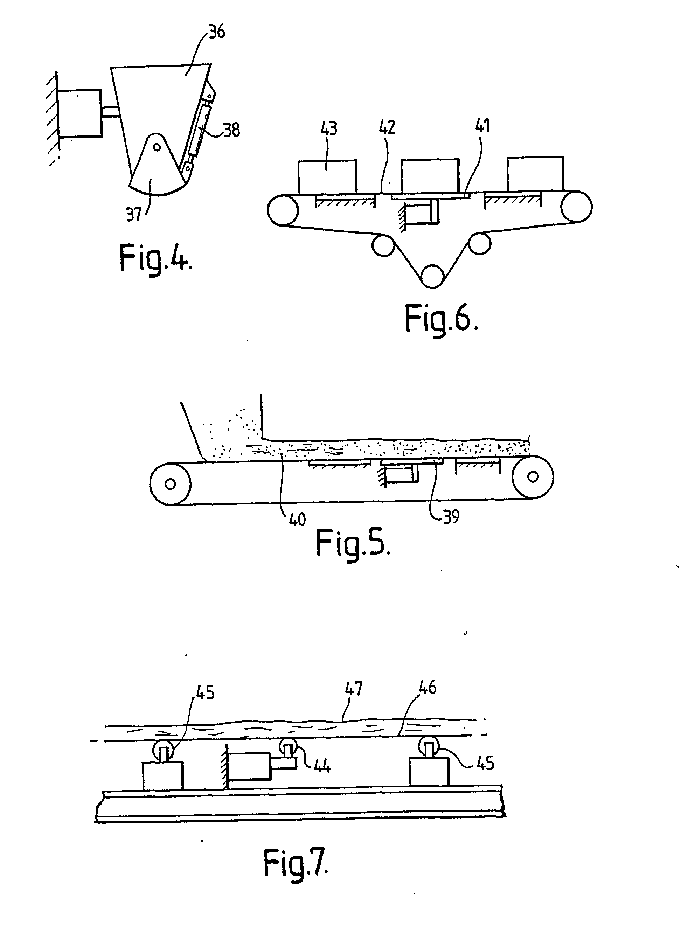

The invention has other applications, some of which are illustrated in Figure 4 to 7.

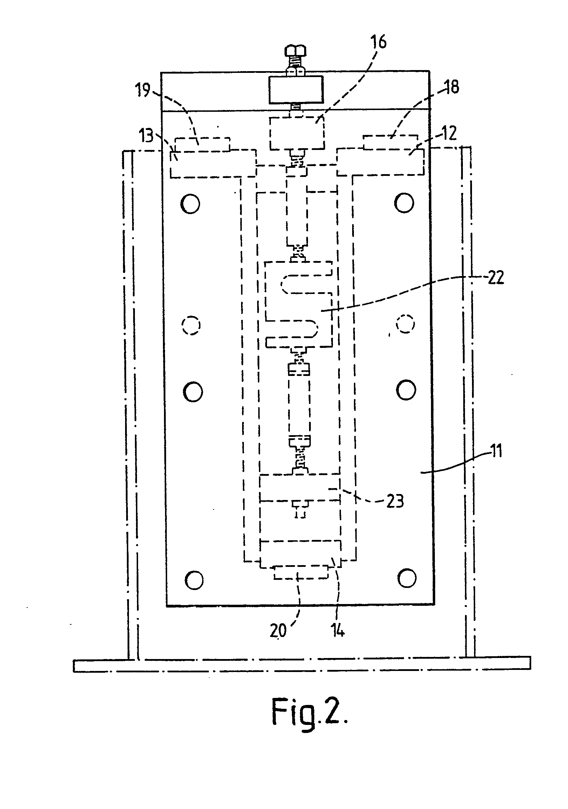

In figure 4, an apparatus substantially identical to that shown in Figures 1 and 2 has a weigh pan attached thereto in the form of a batch weigher 36. Particulate material is fed continually into the pan 36 and periodically, dependent upon the load in the pan at a given time, a pivotal door 37 is opened to deposit a batch, and is then immediately closed, by means of a ram 38.

In the apparatus of Figure 5 an arrangement similar to that shown in Figures 1 and 2 is used to support a platen 39 positioned under a continuous belt 40. Signals from the load cell 22 may for example be fed to the conveyor prime mover to adjust its speed and hence control the flow of material delivered from the conveyor.

In Figure 6 apparatus similar to that shown in Figures 1 and 2 is used to support a platen 41 positioned under a continuous belt 42 used to carry individual packages 43. As each package passes over the platen 41 its weight can be checked.

In Figure 7 apparatus similar to that shown in Figures 1 and 2 is used to support a roller 44 which is positioned between two other support rollers 45 of a continuous belt conveyer 46 carrying material 47. In this arrangement the load cell 22 is continually monitoring the weight of material carried by a given length of the belt.

The weighing apparatus described above with reference to the drawings does not require any anti-sway links or tension wires even for high speed automatic weighing.

Although the load is applied cantilever fashion to one side of the apparatus, the loading of the load cell substantially in pure tension enables an accurate reading to be obtained.

Because the only moving parts involved are the low friction flexure arms 18, 19 and 20, repeatable, accurate weighing can be obtained over long periods, as there is very little movement and substantially no friction or wear.

The use of a single load cell mounted to one side of the weigh pan allows good access to the weigh pan.

The use of a single cell also means that there is no requirement to match and calibrate a plurality of cells and the capacity of the single cell is increased.The single cell has, for example, a working range which is twice that which would be provided by a pair of indentical cells.

Since a simple tension cell may be used, there is no need to use the more expensive shear beam type. Not only can the cell be hermetically sealed but it is, in any event, positioned to one side of the weighing area, out of the immediate vicinity of the particulate material being weighed. It can, if desired, be housed in a separate dustproof compartment.

The invention is not restricted to the details of the foregoing embodiments. It may be adapted to any type of weighing device, either industrial or domestic, having a single load cell or transducer which carries all the forces from the weighing platform or container. The invention can be used to reduce or eliminate the use of springs, levers and the like, normally associated with known weighing machines. It is possible for devices having the features of the invention to meet all the desirable parameters required with other forms of weighing machines or systems.

## Claims

1. Weighing apparatus comprising a fixed member (11), a load supporting member (17), coupling means coupling the load supporting member (17) to the fixed member (11), and a load sensing device (22), characterised in that the coupling means comprises a pair of parallel, spaced apart, elongate flexure means (18, 19, 20) each of which is capable of flexing to permit the load supporting member (17) to move in a first direction past the fixed member (11) but is rigid in the longitudinal direction thus steadying the load supporting member (17) and preventing movement to the load supporting member (17) towards the fixed member (11) in the direction of the longitudinal axis of the flexure means, one end of each flexure means (18, 19, 20) being rigidly connected to the fixed member (11), the other end of each flexure means (18, 19, 20) being rigidly connected to the load supporting member (17), and each flexure means having, adjacent each end, a portion (21) of reduced thickness to define accurately a flexure point, and the apparatus including a first projection (16) rigid with the fixed member (11) and extending towards the load supporting member (17) and a second projection (23) rigid with the load supporting member (17) and extending towards the fixed member (11), the load sensing device (22) being connected between a point on the first projection (16) and a point on the second projection (23), which points move towards and away from one another along a linear path as the load supporting member (17) moves to and fro past the fixed member (11), the load sensing device (22) extending along the linear path so that when load is applied to the load supporting member (17), the load sensing device (22) is subjected to a substantially pure tensile or compressive load, the fixed member (11), the load supporting member (17), and the flexure members (18, 19, 20) forming a parallelogram.

2. Weighing apparatus as claimed in Claim 1, in which the load supporting member (17) is positioned to one side of the fised member (11).

3. Weighing apparatus as claimed in Claim 1 or Claim 2, in which a single load sensing device (22) is used.

4. Weighing apparatus as claimed in any one of the preceding Claims, in which the fixed member (11) and the load supporting member (17) comprise parallel plates extending upwardly, the second projection (23) on the load supporting plate extending below the first projection (16) on the fixed plate so that the load sensing device (22) is subjected to a substantially pure tensile load.

5. Weighing apparatus as claimed in Claim 4, in which another projection (28) from the load supporting plate (17) extends above the first projection (16) of the fixed plate, adjacent to the said first projection of the fixed plate, thus limiting the downward movement to the load supporting plate (17) with respect to the fixed plate (11).

6. Weighing apparatus as claimed in Claim 5, in which yet another projection (28) of the load supporting plate limits the upward movement of the load supporting plate with respect to the fixed plate (11).

7. Weighing apparatus as claimed in any one of the preceding Claims, in whichd the load sensing means (22) comprises a load cell.

8. Weighing apparatus as claimed in any one of the preceding claims, in which a load supporting means (31) is releasably connected to the load supporting member (17).

9. Weighing apparatus as claimed in Claim 8, in which the load supporting means (31) is connected to a further projection (29) which extends from the load supporting member (17) in a direction leading away from the fixed member (11).

10. Weighing apparatus as claimed in Claim 8 or Claim 9, in which the load supporting means (31) comprises a weighing platform or weighing pan.

**Patentansprüche**

1. Wägevorrichtung mit einem festen Element (11), einim Lattragelement (17), einer Kupplung, die das Lasttragelement (17) an das feste Element (11) ankoppelt, und einem Lastsensor (22), dadurch gakennzeichnet, daß die Kupplung ein Paar zueinander paralleler, einem gegenseitigen Abstabd aufweisender, laggestreckter flexibler Elemente (18, 19, 20) aufweist, deren jedes dazu in der Lage ist, sich zu verbiegen, damit sich das Lasttragelement (17) in einer esten Richtung nach dem festen Element (11) bewegen kann, daß jedoch in Längsrichtung starr ist and somit da Lasttragelement (17) vergleichmäßigt und eine Bewegung des Lasttragelementes (17) gegen das feste Element (11) in Richtung der Längsachse des flexiblen Elementes verhindert, wobei ein Ende eines jeden flexiblen Elementes (18, 19, 20) an das feste Element (11) starr angesschlossen ist, während das andere Ende eines jeden flexiblen Elements (18, 19, 20) an das lasttragende Element (17) starr angeschlossen ist, und wobie jedes flexible Element im Bereich eines jeden Endes einen Bereich (21) verringerter Stärke aufweist, um einen Biegepunkt, genau zu definieren, wobei die Vorrichtung einen esten Vorsprung (16) aufweist, der mit dem festen Element (11) starr ist und sich zum Lasttragelement (17) hin estreckt, und einen zweiten Vorsprung (23), der mit de Lasttragelement (17) starr ist und sich um festen Element (11) hin estreckt, wobei der Lastsensor (22) zwischen einem Punkt am esten Vorsprung (16) und einem Punkt am zweiten Vorsprung (23) angeschlossen ist, wobei diese Punkte sich auf einem geradlinigen Weg dann aufeinander zu und voneinander hinwegbewegen, wenn sich das Lasttragelement (17) zum festen Element (11) und von diesem hinweg bewegt, wobei der Lastsensor (22) sich entlang den geradlinigen Weg estreckt, so daß dann, wenn auf das Lasttragelement (17) Last aufgebracht wird, der Lastsensor (22) einer im wesentlichen reinen Zug- oder Drucklast unterworfen wird, wobei, das feste Element (11), das Lasttragelement (17) und die flexiblen Elemente (18, 19, 20) ein Parallelogram bilden.

2. Wägevorrichtung nach Anspruch 1, dadurch gekennzeichnet, daß das Lasttragelement (17) auf der einen Seite des festen Elementen (11) angeordnet ist.

3. Wägevorrichtung nach Anspruch 1 oder 2, dadurch gekennzeichnet, daß ein einziger Lastsensor (22) verwendet wird.

4. Wägevorrichtung nach einem der vorausgegangenen Ansprüche, dadurch gekennzeichnet, daß das feste Element (11) und das Lasttragelement (17) parallele, sich nach oben erstreckende Platten umfassen, und daß der zweite Vorsprung (23) auf der lasttragenden Platte sich unterhalb des ersten Vorsprunges (16) auf der festen Platte erstreckt, so daß der Lastsensor (22) einer im wesentlichen reinen Zuglast ausgesetzt ist.

5. Wägevorrichtung nach Anspruch 4, dadurch gekennzeichnet, daß sich ein weiterer Vorsprung (28) von der Lasttrageplatte (17) oberhalb des ersten Vorsprunges (16) de festen Platte erstreckt, und zwar im Bereich des ersten Vorsprunges der festen Platte, und somit die Abwätsbewegung der lasttragenden Platte (17) in Bezug auf die feste Platte (11) begrenzt.

6. Wägevorrichtung nach Anspruch 5, dadurch gekennzeichnet, daß ein weiterer Vorsprung der lasttregenden Platte deren Aufwärtsbewegung in Bezug auf die feste Platte (11) begrenzt.

7. Wägevorrichtung nach einem der vorausgegengenen Ansprüche, dadurch gekennzeichnet, daß der Lastsensor (22) eine Wägezelle umfaßt.

8. Wägevorrichtung nach einem der vorausgegangenen Ansprüche, dadurch gekennzeichnet, daß ein Lasttrageelement (31) abnehmbar am Lasttragelement (17) angeschlossen ist.

9. Wägevorrichtung nach Anspruch 8, dadurch gekennzeichnet, daß das Lasttragemittel (31) an einem weiteren Vorsprung (29) angeschlossen ist, der sich von Laststragelement (17) in eine Richtung erstreckt, die vom festen Element (11) hinwegweist.

10. Wägevorrichtung nach Anspruch 8 oder 9, dadurch gekennzeichnet, daß das Lasttragemittel (31) eine Wägeplattform oder eine Waagschale umfaßt.

**Revendications**

1. Appareil de pesage comportant un élément fixe (11), und élément de support de charge (17), un moyen d'accouplement accouplant l'élément de carge (17) à l'élément fixe (11), et un dispositif de détection de charge (22), caractérisé en ce que le moyen d'accouplement comporte un paire de moyens de flexion allongés, parallèles, espacés l'un de l'autre (18, 19, 20) dont chacun est capable de fléchir pour permettre à l'élément de support de charge (17) de se déplacer dans une première direction devant l'élément fixe (11), mais est rigide dans la direction longitudinale, stabilisant ainsi l'élément de support de charge (17) et empêchant de l'élément de support de charge (17) vers l'élément fixe (11) suivant la direction de l'axe longitudinal des moyens de flexion, une extrémité de chaque moyen de flexion (18, 19, 20) étant reliée de mainère rigide à l'élémente fixe (11), l'autre extrémité de chaque moyen de flexion (18, 19, 20) étant reliée de manière rigide à l'élément de support de charge (17), et chaque moyen de flexion ayant, au voisinage de chaque extrémité, ne partie (21) d'épaisseur réduite pur définir avec précision un point de flexion, et l'appareil comprenant une première partie en saillie (16) solidaire de l'élément fixe (11) et s'étendant vers l'élément de support de charge (17) et une seconde partie en saillie (23) solidaire de l'élément de support de charge (17) et s'étendant vers l'élément fixe (11), le dispositif de détection de charge (22) étant relié entre un point situé sur la premiére partie en saillie (16) et un point situé sur la seconde partie en saillie (23), lesdits points s'approchant et s'éloignant l'une de l'autre le long d'un traject linéaire lorsque l'élément de support de charge (17) effectue un mouvement d'aller et retour devant l'élément fixe (11), le dispositif de détection de charge (22) s'étendant le long du trajet linéaire de sorte que, lorsqu'une charge est sppliquée à l'élément de support de charge (17), le dispositif de détection de charge (22) est soumis à un effort de traction ou de compression sensiblement pur, l'élément fixe (11), l'élément de support de charge (17) et les éléments de flexion (18, 19, 20) formant un parallélogramme.

2. Appareil de pesage selon la revendication 1 dans lequel l'élément de support de charge (17) est positionné d'un côté de l'élément fixe (11).

3. Appareil de pesage selon la revendication 1 ou la revendication 2, dans lequel un seul dispositif de détecton de charge (22) est utilisé.

4. Appareil de pesage selon l'une quelconque des revendications précédentes, dans lequel l'élément fixe (11) et l'élément de support de charge (17) se composent de plaques parallèles s'étendant vers le haut, la seconde partie en saillie (23) située sur la plaque de support de charge s'étendant en dessous de la première partie en saillie (16) située sur la plaque fixe de sorte que le dispositif de détection de charge (22) est soumis à un effort de traction sensiblement pur.

5. Appareil de pesage selon la revendication 4, dans lequel une autre partie en saillie (28) s'étendant à partir de la plaque de support de charge (17) s'étend au-dessus de laa première partie en sillie (16) de la plaque fixe, au voisinage de ladite première partie en saillie de la plaque fixe, limitant ainsi le déplacement vers le base de la plaque de support de charge (17) par rapport à la plaque fixe (11).

6. Appareil de pesage selon la revendication 5, dans lequel encore une autre partie en saillie (28) de la plaque de support de suport de charge limite le déplacement vers le haut de la plaque de support de charge par rapport à la plaque fixe (11).

7. Appareil de pesage selon l'une quelconque des revendications précédentes, dans lequel le moyen de détection de charge (22) comporte une cellulue de charge.

8. Appareil de pesage selon l'une quelconque des revendications précédentes, dans lequel un moyen de support de charge (31) est relié de manière amovible à l'élement de support de charge (17).

9. Appareil de pesage selon la revendication 8, dans lequel le moyen de support de charge (31) est relié à encore une autre partie en saillie (29) qui s'étend depuis l'élément de support de charge (17) dans un direction qui s'éloigne de l'élément fixe (11).

10. Appareil de pesage selon la revendication 8 ou la revendication 9, dans lequel le moyen de support de charge (31) comporte un plateau de pesage ou un bac de passage.

EP 0 181 147 B1

Fig.1.

1

Fig.2.

Fig.3.

Fig.4.

Fig.6.

Fig.5.

Fig.7.

4